# EUROPEAN PATENT SPECIFICATION

(11) **EP 3 996 913 B1**
(45) Date of publication and mention of the grant of the patent: **02.10.2024**
(21) Application number: 20736373.0
(22) Date of filing: 09.07.2020
(51) Int. Cl.: B32B 17/10, B32B 27/22

(54) **ILLUMINABLE LAMINATION INTERLAYER AND GLAZING**
BELEUCHTBARE LAMINIERUNGSZWISCHENSCHICHT UND VERGLASUNG
INTERCOUCHE DE STRATIFICATION ILLUMINABLE ET VITRAGE

(30) Priority: 10.07.2019 EP 19185527
(43) Date of publication of application: 18.05.2022
(73) Proprietor: Kuraray Europe GmbH, 65795 Hattersheim (DE)
(72) Inventor: BIER, Felix, 76879 Ottersheim (DE); KELLER, Uwe, 77210 Avon (FR); MUMMY, Florian, 60325 Frankfurt am Main (DE)
(74) Representative: Janßen, Christian Oliver
(86) International application number: PCT/EP2020/069386
(87) International publication number: WO 2021/005162

(56) References cited:
- WO-A1-2016/156721
- WO-A1-2017/085079
- WO-A1-2018/141742
- US-B2- 10 105 932

## Description

Described is a transparent lamination interlayer and laminate structure which enables the application of optically improved functional layers, structures or patterns, especially for transparent lighting and display applications.

Transparent surfaces, especially glass facades of buildings or automotive glazing are more and more subject to functionalization. The main fields of interest are transparent sun control, lighting and displaying of information. In the automotive market illumination of transparent glass surfaces is of particular interest.

DE 10204359 A1 describes a device for illuminating an automotive sunroof. However, the structure of the device described therein is rather complex and leads to an increased thickness of the sunroof part. This thickness increase unavoidably leads to a reduction of the headspace of the driver and to an increase of the vehicle weight.

DE 10 2012 109 900 B4 describes illuminable glazing for an automotive sunroof comprising a light guiding layer made with light scattering particles embedded therein or with a physically modified surface.

WO 2017/085079 A1 discloses a chromatic stratified glass structure comprising two glass sheets; and an adhesive transparent polymeric layer sandwiched between the two glass sheets, wherein the face of one of said two glass sheets facing the adhesive polymeric layer is coated with a nanoparticle-loaded paint as a Rayleigh-like diffusing interlayer for visible light which preferentially scatters short- wavelength components of impinging light with respect to long-wavelength components of impinging light, or wherein the adhesive polymeric layer itself is coated with said nanoparticle- loaded paint. Said adhesive polymeric layer is made of EVA or PVB.

However, there is still a need for improved illuminable glazing. Therefore, one objective of the present invention is a laminated glazing with improved production costs, raw material costs and/or an improved environmental footprint. Another objective of the present invention is to provide laminated glazing with improved characteristics like an improved thermal stability, improved optical properties like an improved haze, transparency and/or transmissibility, and/or improved design features.

Accordingly, the present invention provides a laminated glazing comprising two sheets of glass (101,105) and at least one polymer interlayer film (102), as well as a further polymer interlayer film (102A) comprising polyvinyl butyral and at least 22 % by weight of a plasticizer before lamination, between the two sheets of glass characterized in that a functional layer (103) comprising light scattering particles is applied to at least one surface of the polymer interlayer film (102), wherein the polymer interlayer film (102) comprises polyvinyl butyral and optionally a plasticizer W, wherein the content of plasticizer W in the polymer interlayer film (102) before lamination is equal to or less than 5%. Furthermore, the polymer interlayer film (102) has a thickness of equal to or more than 10 microns , to equal to or less than 250 microns before lamination.

One advantage of using a polyvinyl butyral (PVB) polymer interlayer film (102) with very little or no plasticizer is the possibility to generate a film with a particularly smooth surface and thus a better, homogeneous print image on the smooth side. Also, the polyvinyl butyral material used for film 102 is naturally very compatible with the standard PVB interlayers used in the glass industry. Furthermore, the a plasticizer-free and therefore stiff PVB film 102 can be printed on using new, more economical roll-to-roll processes such as flexographic printing. This is not possible with glass or soft PVB films.

### Brief description of the drawings

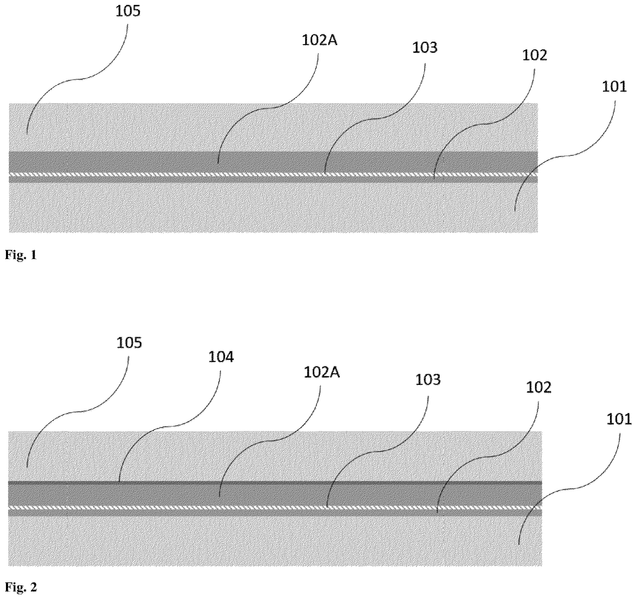

Fig 1 illustrates one embodiment of a laminated glass structure of the invention according to example 1
Fig 2 illustrates a further embodiment of 5 a laminated glass structure of the invention according to example 2

Preferably, the polymer interlayer film (102) also comprises homo- or copolymers of (meth)acrylates, poly(vinyl) acetals, ionomers like ethylene methacrylic acid copolymers, nitro cellulose, polystyrenes, thermoplastic polyurethane, polycarbonates, polyvinyl chloride, polyolefines like polyethylene or polypropylene, polyethylene terephthalate, ethylene-vinyl acetate or mixtures thereof.

The light scattering particle are typically applied to the at least one surface of the polymer interlayer film (102) by means of a coating or printing process. In case of printing, they can be applied via techniques that are commonly known in the printing industry such as offset printing, rotogravure printing, flexography, screen-printing and inkjet printing.

The thickness of the functional layer (103) is preferably 0.1 µm to 100 µm, more preferably 1.0 µm to 20 µm before lamination.

The functional layer (103) preferably comprises the light scattering particles and at least one matrix material. Suitable matrix materials include polymers in which the light scattering particles can be homogenously dispersed without decomposition. Preferably, the matrix material comprises homo- or copolymers of (meth)acrylate, methyl methacrylate, poly(vinyl) acetal, nitro cellulose, polystyrene, poly vinyl alcohol, polyurethane, poly carbonate and polyvinyl chloride. Most preferably, the matrix material is polyvinyl butyral.

Further components might be present in the functional layer (103 ). Examples of further components include co-resins, solvents, UV absorber, UV-stabilizer, cross-linker, curing agents, accelerants, photo-initiators, surfactants, stabilizers, filler, thixotropic modifiers and plasticizers.

Light scattering materials known in the art can be employed. Preferably, the light scattering particles are chosen from the group consisting of TiO₂, ZnO, Al₂O₃, ZrO₂, PbSO₄, BaSO₄, CaCO₃, glass, polymers and mixtures thereof. The light scattering particles can be used as solid or hollow beads or fibres.

Preferably, the light scattering particles are present in the functional layer (103) in an amount of 0.1 to 10 % by weight, more preferred 0.5 to 5 % by weight, most preferably 1 to 2.5 % by weight.

Also preferably, the light scattering particles have a median particle size D50 by volume determined by the laser diffraction method according to DIN 13320 of equal to or more than 0.001, more preferably 0.01 µm, 0.05 µm or 0.1 µm. Also preferably they are equal to or less than 10.0 µm, more preferably 5.0 µm and most preferably 1.0 µm. Preferably, the median particle size by volume determined by the laser diffraction method according to DIN 13320 is equal to or more than 0.01 µm and equal to or less than 1.0 µm.

Preferably, the light scattering particles are present in the functional layer (103) in form of a concentration gradient, i.e. concentration of functional particles in the functional layer (103) varies depending on the distance to the light source. More preferably, the concentration of light scattering particles in the functional layer (102) increases with an increasing distance to the nearest light source.

In one embodiment, the laminated glass according to the present invention is used as glazing in an automobile. Preferably, the second glass sheet (105) is facing the outside of the vehicle. Also preferably, the laminated glazing of the present invention is used for a sunroof. In that case, second glass sheet (105) may be tinted in order to reduce the solar energy which is transmitted through the laminate into the vehicle and thus may show increased absorption. Such highly light-absorptive sheets are particularly unsuited as optical waveguides.

Preferably, the functional layer (103) completely covers the at least one surface of the polymer interlayer film (102).

Also preferably, the functional layer (103) covers only part of the polymer interlayer film (102). Thus, the functional film (103) can be applied in form of a pattern and illumination in form of certain pattern can be achieved, which is not possible in case the light scattering particles are evenly dispensed in the laminate. Thus, preferably, the functional film (103) covers equal to or less than 90%, 80%, 75% and most preferably less than 50% of the at least one surface of the polymer interlayer film (102). This embodiment is especially useful for informative and/or decorative glazing for aircrafts, trains or ships and for use in the construction area, especially for shop windows, elevators or facade glazing.

The thickness of the functional layer (103) is preferably from 0.1 to 50 µm, more preferably, from 1 to 30 µm, most preferably from 2 to 20 µm as measured by IR microscopy.

In the present invention optically transparent means completely optically transparent as well as semi-transparent. Hence, optically transparent means that at least 40% of the initial light passes through the device comprising layer (103), even more preferred is 50 to 100%, and even more preferred is 80 to 100%. The transparency (light transmission) is determined as light transmission TL (380 to 780 nm) based on DIN EN 410 on a test laminate using two standard panes of clear glass.

For the avoidance of doubt, the light transmission is measured in an area of the test laminate which comprises the functional layer (103) and is compared to an area which does not comprise the functional layer (in the same laminate or, if the functional layer (103) completely covers the surface of the polymer interlayer film (102), on a test laminate prepared without the functional film (103) using the same type of film).

In order to avoid haze in the polymer interlayer films (102) and (102A), the amount of chloride ions and/or nitrate ions and/or sulphate ions in any of the different layers may be reduced. The chloride content can thus be less than 150 ppm, preferably less than 100 ppm, and in particular less than 50 ppm. Most preferably, the chloride content is less than 10 ppm. The nitrate content may be less than 150 ppm, preferably less than 100 ppm, and in particular less than 50 ppm. Most preferably, the nitrate content is less than 10 ppm. Again optionally, the sulphate content may be less than 150 ppm, preferably less than 100 ppm, and in particular less than 50 ppm, most preferably less than 10 ppm.

Also preferably, the polymer interlayer film (102) comprises polyvinyl butyral and a plasticizer W, wherein the content of plasticizer W in the polymer interlayer film (102) before lamination is equal to or less than 20%. More preferably less than 15%, more preferably less than 10% or 5% and more preferably less than 0.5% or more preferably, the polymer interlayer film is free of any added plasticizer.

The term "before lamination" shall denote the state of the film before it is brought into contact with any of the other components of the present laminated glazing.

In case of polyvinyl butyral, the films are generally produced by extrusion with use of a cast-film line or in the form of a blown film. Here, a surface roughness may also be produced by controlled melt fracture or with the cast-film method additionally by use of a structured chill roll and/or structure back roll. Preferably, the at least one surface of polymer interlayer film (102) has a roughness Rz of equal to or less than 10 µm before lamination measured in accordance with EN ISO 4287. The polymer interlayer film (102) used in accordance with the invention preferably has a one-sided surface structure with a roughness Rz of less than 25 um, preferably from 0.1 to 10 um, more preferably Rz from 1 to 5 um. This smooth surface ensures that light scattering particles can be applied to the surface of polymer interlayer film (102) in a very homogenous manner leading to a high quality optical pattern of the illuminated glazing. The other surface of the polymer interlayer film may have roughness as described above.

However, regular lamination interlayers made from polyvinyl butyral typically have a rougher surface to ensure proper de-airing during the lamination process. The roughness of such films typically range from an Rz value of 20 to 80 µm. Thus, the other surface of the polymer interlayer film may have roughness as of 0.1 to 50 µm, preferably 1 to 20 µm, more preferably 5 to 10 µm.

The polymer interlayer film (102) has a thickness of equal to or more than 10 µm to equal to or less than 250 µm before lamination, more preferably 20 to 160 um, most preferably 30 to 120 um, also preferably 40 to 100 um and at specifically 50 to 80 um. This range of thickness does not include additional coating on the film. It is especially preferred for these thin polymer interlayer films to have the low or no content of plasticizer or even no plasticizer as described earlier to avoid sticking issues and to exhibit the required rigidity to print on and handle such thin films.

The further polymer interlayer film (102A) comprises polyvinyl butyral. Preferably, at least one surface of the further polymer interlayer film (102A) has a roughness Rz of 20 to 80 µm, more preferably, 25 to 70 µm, and most preferably 30 to 60 µm before lamination measured in accordance with EN ISO 4287. Also preferably, the other surface has a roughness Rz of 20 to 80 µm, more preferably, 25 to 70 µm, and most preferably 30 to 60 µm before lamination measured in accordance with EN ISO 4287.

Further polymer interlayer film (102A) may be any plasticized PVB film known in the art, i.e. it may contain a single plasticiser as well as mixtures of plasticisers, before lamination, at least 22 % by weight, such as 22.0 to 45.0 % by weight, preferably 25.0 to 32.0 % by weight and in particular 26.0 - 30.0 % by weight plasticiser (s) .

Suitable plasticizers include one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.

- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids;
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Particularly preferred are 1,2-cyclohexane dicarboxylic acid diisononyl ester (DINCH) or triethylene glycol-bis-2-ethyl hexanoate (3GO or 3G8).

In addition, polymer interlayer films (102) and (102A) may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

Alternatively, the polymer interlayer film (102) and/or the further polymer interlayer film comprise less than 0.15 % by weight, more preferably no UV absorber to avoid color shift in the visible light.

The thickness of the further polymer interlayer film (102A) before lamination is preferably 250 to 2500 um, more preferably 300 to 1600 um, more preferably 380 - 1200 µm and most preferably 600 to 900 um.

It is especially preferred to use polymer interlayer films (102) and (102A) that have at least one rougher surface and orientate them in a manner that the rougher surface is in contact with the glass sheets (101,105) in order to allow sufficient de-airing in the lamination process.

Depending on the location where the final glazing is used, e.g. in case of an automotive sunroof, the second glass sheet (105), which faces the sun, may often be tinted in order to reduce the solar energy which is transmitted through the laminate into the vehicle. Thus, an optical separation layer (104) may be used between the optionally tinted glass sheet (105) and the light source in order to reduce the amounts of the light which enters glass sheet (105), where it would be absorbed and lost for the purpose of illumination.

Accordingly, another embodiment of the present invention concerns a laminated glazing comprising, in that order, a first sheet of glass (101), a further polymer interlayer film (102A), a functional layer (103), a polymer interlayer film (102), and an optical separation layer (104), and a second sheet of glass (105).

The optical separation layer (104) may consist of any medium which is capable of preventing major amounts of light entering glass sheet (105). As regular lamination interlayers have a similar refractive index as the clear glass sheets (101,105) these are not well suited as optical separation layer (104). Hence, the refractive index of the optical separation layer (104) has to be significantly lower. The lower the refractive index of optical separation layer (104), the more efficient the light guiding and the lighting will be. Suited materials show sufficient adhesion, cohesion and mechanical strength to enable a firm bond between the neighbouring layers (102) and (105). Suitable material include a polymer or inorganic materials or composites of these. Furthermore, the low refractive index layer may consist of a nanoscale, porous material, which enables to incorporate low refractive index fluids in its pores.

In another configuration, the low refractive index layer can also be chosen to be a simple gap filled by air or another gas in a similar fashion as is the case in common insulating glass units. In another embodiment, the gap may be chosen to be left unfilled, thus providing a vacuum in a similar fashion as for vacuum insulating glasses. In this latter case, the gap needs to be held open and prevented from collapsing by tiny spacers in form of printed on dots which preferably are made from a non-transparent, preferably white material.

Inherent part of the final application is the light source (106), which provides the light which is coupled into the light guiding layers (101) and (102) via an optical connector (107). The optical connector (107), which is a transparent, optically clear material with low light absorption, may form a permanent bond between the light source (106) and the light guiding layers (101) and (102), e.g. by means of physical and/or chemical curing, optical clear adhesive. Alternatively, by a positive-fit or force-fit connection. The latter options allows for an improved maintainability, e.g. change of the light source (106). Materials which are suited for positive-fit or force-fit materials are optically clear polymers, especially elastomers. The light source (106) may be any conventional light source, preferably it is an LED light source.

A second aspect of the present invention is a process for the production of a laminated glazing as described above comprising a step wherein the functional film (103) is applied to the polymer interlayer film (102) by means of a printing or coating process. The glass sheets (101,105) and the various interlayer films can be laminated by any known lamination technique known in the art.

### Examples

For forming the functional layer (103) a printing ink, consisting of 0.40 % by weight titanium dioxide (as light scattering particles) with a particle size D50 of 0.15 µm determined by laser diffraction method according to DIN 13320, 27.0 % by weight of poly(methyl methacrylate) (PMMA) (as matrix material) and 36.3 % by weight of 2-butoxyethanol acetate and 36.3 % by weight of cyclohexanone (as sacrificial solvents), was chosen.

### Example 1

A polyvinyl butyral interlayer with a thickness of 50 µm containing no added plasticizer was used. This substrate had a side A with a roughness Rz of 10 µm and a side B with a roughness Rz of 5 µm. The functional layer was applied to the side B of the interlayer by screen printing using the above described printing ink. A screen with 120 threads/cm and a thread diameter of 34 µm was used. The screen was previously treated with a photoemulsion which was partially cured to form the desired printing pattern of a rectangle measuring 5 cm x 10 cm. The printed ink was dried for 30 minutes at room temperature. The printed substrate was then placed on a regular sheet of float glass with a thickness of 2 mm so that the unprinted side A was in direct contact with the glass. On top of the printed side B of the substrate a regular, plasticized polyvinyl butyral interlayer 0.76 mm, Trosifol^{®} UltraClear available from Kuraray Europe GmbH) was placed. On top of this second interlayer a second sheet of regular float glass with a thickness of 2 mm was placed. All layers were A4 sized and were fixed in above described sequence by applying adhesive tapes to the outer glass sheets. In an vacuum bag this stack was then pre-laminated by applying a vacuum at room temperature for 15 minutes, followed by a vacuum at 110°C for another 15 minutes. After pre-lamination the pre-laminate was autoclaved in an autoclave at 140°C and a pressure of 12 bar for 90 minutes.

Due to the low roughness of side B of the first polyvinyl butyral interlayer, a homogeneous illumination of the printed region was obtained as compared to laminates which had been made with printed, standard lamination interlayers like Trosifol^{®} UltraClear from Kuraray Europe GmbH with a higher roughness. Furthermore, a high visible light transmission (TL) (380 to 780 nm) measured according to DIN EN 410 was achieved in the printed region of the laminate:

| | TL[%] |
|---|---|
| Printed region | 88.0 |
| Non-printed region | 89.5 |
| Δ | 1.50 |

### Example 2

A polyvinyl butyral interlayer with a thickness of 50 µm and no added plasticizer is used. This substrate has a side A with a roughness Rz of 10 µm and a side B with a roughness Rz of 5 µm. The functional layer is applied to the side B of the substrate by screen printing using the above described printing ink. A screen which has 120 threads/cm and a thread diameter of 34 µm is used. The screen is previously treated with an photoemulsion which is partially cured to form the desired printing pattern of rectangle measuring 5 cm x 10 cm. The printed ink is dried for 30 minutes at room temperature. The printed substrate is then placed on a sheet of low-iron glass with a thickness of 2 mm so that the unprinted side A is in direct contact with the glass. On top of the printed side B of the substrate a regular, plasticized polyvinyl butyral interlayer (thickness: 0.76 mm, Trosifol^{®} UltraClear available from Kuraray Europe GmbH) is placed. On top of this thicker interlayer a 2 mm thick tinted glass sheet having a visible light transmission TL (380 to 780 nm) of 10% measured according to DIN EN 410 is placed. The tinted glass sheet has a regular side A and a side B which faces interlayer and is coated with a low refractive index coating having an refractive index of 1.25.

All layers are A4 sized and are fixed in the above described sequence by applying adhesive tapes to the outer glass sheets. In an vacuum bag this stack is then pre-laminated by applying a vacuum at room temperature for 15 minutes, followed by a vacuum at 110°C for another 15 minutes. After pre-lamination the pre-laminate is autoclaved in an autoclave at 140 °C and a pressure of 12 bar for 90 minutes.

Even within such laminate which comprises a highly absorptive tinted glass sheet 105 the functional layer 103 can be illuminated sufficiently, as the low refractive index coating 104 optically separates the tinted glass sheet 105 from the light guide layers 101,102,103 and 102A.

### Example 3

A 1.05 m wide, plasticizer-free polyvinyl butyral film with a thickness of 35 µm and a surface roughness of 1 µm on its top side and 5 µm on its bottom side was doubled with 40 µm thick OPP carrier film on the bottom side. The OPP carrier film was wound-in without application of heat to form a temporary unit with the thin PVB to stabilize the web in the printing step and prevent any contamination or ink transfer to the unprinted side of the PVB and was essentially held together by electrostatic force. The PVB side of the temporary bi-lam was printed-on in a flexographic press using an water based ink essentially containing a poly-urethane binder, 1% of TiO₂, ink additives and water as the suspension liquid. An EPDM printing sleeve with a continuous dot pattern (1 mm dot diameter, 2 mm inter-dot distance in horizontal and vertical direction) was used as the printing master. An anilox roller with an ink transfer volume of 3 g/m² was chosen and the film was printed at a speed of 60 m/min and wound to a roll. The resulting dry layer thickness of the ink was in the range of 1 µm. A 50 × 50 cm glass/glass laminate with the light diffusing interlayer and a standard PVB interlayer was constructed in the following way: 2.1 mm Planiclear^{®} glass of above dimension was prepared by washing it dust free, the OPP carrier film was carefully removed and the 35 µm printed PVB was positioned on the first glass with the printed side facing upwards and the 5 µm rough bottom side contacting the glass surface. TROSIFOL^{®} NR 200 was placed on top of the printed PVB and the assembly was completed with the second glass. Lamination was done using standard rubber bag and the same overall process conditions from above. The resulting laminate did hardly show any visual haze upon inspection (the dots being practically invisible when the laminate is inspected under normal illumination). An LED bar was attached to one edge of the laminate and when lit up, the according light colour couples out and the dot pattern appears to be illuminated.

Above laminate was compared to a region of a laminate of identical construction, except that in that region, a non-printed 35 µm film was used instead of the dot-printed film

Visible light transmission TL and Haze were measured according to ISO 9050 and ASTM D1003. The results indicate that despite the good light diffusing properties, the light diffusing print on a thin PVB only slightly reduces TL and only slightly increases visible haze:

| | |
|---|---|
| TL[%] | |

| | |
|---|---|
| Printed region | 88.0 |
| Non-printed region | 89.5 |
| Δ | 1.50 |

## Claims

1. Laminated glazing comprising two sheets of glass (101,105) and at least one polymer interlayer film (102) and a further polymer interlayer film (102A) between the two sheets of glass **characterized in that** a functional layer (103) comprising light scattering particles is applied to at least one surface of the polymer interlayer film (102), wherein the polymer interlayer film (102) comprises polyvinyl butyral and optionally a plasticizer W, wherein the content of plasticizer W in the polymer interlayer film (102) before lamination is equal to or less than 5% and wherein the polymer interlayer film (102) has a thickness of equal to or more than 10 µm to equal to or less than 250 µm before lamination and wherein the further polymer interlayer film (102A) comprises polyvinyl butyral and before lamination, at least 22 % by weight of a plasticiser.

2. The laminated glazing according to claim 1 wherein the light scattering particles are chosen from the group consisting of TiO₂, ZnO, Al₂O₃, ZrO₂, PbSO₄, BaSO₄, CaCO₃, glass, polymers and mixtures thereof.

3. The laminated glazing according to claim 1 or 2 wherein the light scattering particles have a median particle size by volume D50 determined by the laser diffraction method according to DIN 13320 of equal to or more than 0.01 µm to equal to or less than 1.0 µm.

4. The laminated glazing according to any one of the claims 1 to 3 wherein the functional layer (103) has a light transmission TL (380 to 780 nm) measured according to DIN EN 410 before lamination of equal to or more than 80%.

5. The laminated glazing according to any one of the claims 1 to 4 wherein the polymer interlayer film (102) comprises polyvinyl butyral and is free of any added plasticizer.

6. The laminated glazing according to any one of the claims 1 to 5 wherein the at least one surface of polymer interlayer film (102) has a roughness Rz of equal to or less than 10 µm before lamination.

7. The laminated glazing according to any one of the claims 1 to 6 wherein the light transmission of the laminate is equal to or above 80 %.

8. The laminated glazing according to any one of the claims 1 to 7 comprising, in that order, a first sheet of glass (101), a further polymer interlayer film (102A), a functional layer (103), a polymer interlayer film (102), and an optical separation layer (104), and a second sheet of glass (105).

9. The laminated glazing according to any one of the claims 1 to 8 further comprising a light source (106) and an optical connector (107) in contact with the first sheet of glass (101).

10. A process for the production of the laminated glazing according to any one of the claims 1 to 9 comprising a step wherein the functional film (103) is applied to the polymer interlayer film (102) by means of a printing or coating process.

## Patentansprüche

1. Laminierte Verglasung umfassend zwei Scheiben Glas (101, 105) und mindestens eine Polymerzwischenschichtfolie (102) und eine weitere Polymerzwischenschichtfolie (102A) zwischen den beiden Scheiben Glas, **dadurch gekennzeichnet, dass** eine funktionelle Schicht (103), die Lichtstreuungsteilchen umfasst, auf mindestens eine Oberfläche der Polymerzwischenschichtfolie (102) aufgebracht ist, wobei die Polymerzwischenschichtfolie (102) Polyvinylbutyral und wahlweise einen Weichmacher W umfasst, wobei der Gehalt von Weichmacher W in der Polymerzwischenschichtfolie (102) vor dem Laminieren gleich wie oder weniger als 5 % beträgt und wobei die Polymerzwischenschichtfolie (102) eine Dicke gleich wie oder mehr als 10 um bis gleich wie oder weniger als 250 µm vor dem Laminieren aufweist und wobei die weitere Polymerzwischenschichtfolie (102A) Polyvinylbutyral und vor dem Laminieren mindestens 22 Gew.-% eines Weichmachers umfasst.

2. Laminierte Verglasung nach Anspruch 1, wobei die Lichtstreuungsteilchen aus der Gruppe ausgewählt werden bestehend aus TiO₂, ZnO, Al₂O₃, ZrO₂, PbSO₄, BaSO₄, CaCO₃, Glas, Polymeren und Mischungen davon.

3. Laminierte Verglasung nach Anspruch 1 oder 2, wobei die Lichtstreuungsteilchen eine mittlere Teilchengröße, auf das Volumen bezogen, von D50, dem Laserbeugungsverfahren DIN 13320 entsprechend bestimmt von gleich oder mehr als 0,01 um bis gleich oder weniger als 1,0 um.

4. Laminierte Verglasung nach einem der Ansprüche 1 bis 3, wobei die funktionelle Schicht (103) eine Lichttransmission TL (380 bis 780 nm), DIN EN 410 entsprechend gemessen, vor der Laminierung von gleich wie oder mehr als 80 % aufweist.

5. Laminierte Verglasung nach einem der Ansprüche 1 bis 4, wobei die Polymerzwischenschichtfolie (102) Polyvinylbutyral umfasst und frei von irgendeinem zugesetzten Weichmacher ist.

6. Laminierte Verglasung nach einem der Ansprüche 1 bis 5, wobei die mindestens eine Oberfläche der Polymerzwischenschichtfolie (102) eine Rauheit Rz von gleich wie oder weniger als 10 µm vor der Lamination aufweist.

7. Laminierte Verglasung nach einem der Ansprüche 1 bis 6, wobei die Lichttransmission des Laminats gleich wie oder über 80 % ist.

8. Laminierte Verglasung nach einem der Ansprüche 1 bis 7, umfassend, in dieser Reihenfolge, eine erste Scheibe Glas (101), eine weitere Polymerzwischenschichtfolie (102A), eine funktionelle Schicht (103), eine Polymerzwischenschichtfolie (102) und eine optische Trennschicht (104) und eine zweite Scheibe Glas (105).

9. Laminierte Verglasung nach einem der Ansprüche 1 bis 8, ferner eine Lichtquelle (106) und einen optischen Anschluss (107) in Kontakt mit der ersten Scheibe Glas (101) umfassend.

10. Verfahren für die Herstellung der laminierten Verglasung nach einem der Ansprüche 1 bis 9, umfassend einen Schritt, wobei die funktionelle Folie (103) auf die Polymerzwischenschichtfolie (102) durch einen Druck- oder Beschichtungsvorgang aufgebracht wird.

## Revendications

1. Vitrage laminé comprenant deux feuilles de verre (101, 105) et au moins un film d'intercouche polymère (102) et un autre film d'intercouche polymère (102A) entre les deux feuilles de verre **caractérisé en ce qu'**une couche fonctionnelle (103) comprenant des particules de diffraction de lumière est appliquée à au moins une surface du film d'intercouche polymère (102), le film d'intercouche polymère (102) comprenant du butyral de polyvinyle et éventuellement un plastifiant W, la teneur du plastifiant W dans le film d'intercouche polymère (102) avant lamination étant inférieure ou égale à 5 % et le film d'intercouche polymère (102) ayant une épaisseur supérieure ou égale à 10 um à inférieure ou égale à 250 µm avant lamination et l'autre film d'intercouche polymère (102A) comprenant du butyral de polyvinyle et avant lamination, au moins 22 % en poids d'un plastifiant.

2. Vitrage laminé selon la revendication 1 dans lequel les particules de diffraction de lumière sont choisies dans le groupe constitué par TiO₂, ZnO, Al₂O₃, ZrO₂, PbSO₄, BaSO₄, CaCO₃, du verre, des polymères et leurs mélanges.

3. Vitrage laminé selon la revendication 1 ou 2 dans lequel les particules de diffraction de lumière ont une taille de particule médiane en volume D50 déterminée par le procédé de diffraction au laser selon la norme DIN 13320 supérieure ou égale à 0,01 um à inférieure ou égale à 1,0 µm.

4. Vitrage laminé selon l'une quelconque des revendications 1 à 3 dans lequel la couche fonctionnelle (103) a une transmission de lumière TL (380 à 780 nm) mesurée selon la norme DIN EN 410 avant lamination supérieure ou égale à 80 %.

5. Vitrage laminé selon l'une quelconque des revendications 1 à 4 dans lequel le film d'intercouche polymère (102) comprend du butyral de polyvinyle et est exempt de tout plastifiant ajouté.

6. Vitrage laminé selon l'une quelconque des revendications 1 à 5 dans lequel l' au moins une surface du film d'intercouche polymère (102) a une rugosité Rz inférieure ou égale à 10 µm avant lamination.

7. Vitrage laminé selon l'une quelconque des revendications 1 à 6 dans lequel la transmission de lumière du stratifié est supérieure ou égale à 80 %.

8. Vitrage laminé selon l'une quelconque des revendications 1 à 7 comprenant, dans cet ordre, une première feuille de verre (101), un autre film d'intercouche polymère (102A), une couche fonctionnelle (103), un film d'intercouche polymère (102) et une couche de séparation optique (104) et une seconde feuille de verre (105).

9. Vitrage laminé selon l'une quelconque des revendications 1 à 8 comprenant en outre une source de lumière (106) et un connecteur optique (107) en contact avec la première feuille de verre (101).

10. Procédé de production du vitrage laminé selon l'une quelconque des revendications 1 à 9 comprenant une étape dans laquelle le film fonctionnel (103) est appliqué au film d'intercouche polymère (102) au moyen d'un processus d'impression ou de revêtement.
